# EUROPEAN PATENT APPLICATION

(11) **EP 4 628 360 A1**
(43) Date of publication of application: **08.10.2025**
(21) Application number: 25167702.7
(22) Date of filing: 01.04.2025
(51) Int. Cl.: B60N 2/28, B60N 2/60

(54) **HEADREST COVER FOR CHILD RESTRAINT SYSTEM AND CHILD RESTRAINT SYSTEM**

(30) Priority: 01.04.2024 US 202463572656 P; 25.05.2024 US 202463652001 P
(71) Applicant: Wonderland Switzerland AG, 6312 Steinhausen (CH)
(72) Inventor: Wainohu, Derek, 6312 Steinhausen (CH)
(74) Representative: ERNICKE Patent- und Rechtsanwälte PartmbB

(57) **Abstract**

In order to avoid the chin-to-chest situation when the child or baby is restrained in the restraint system, a padded headrest cover (300, 700) for a child restraint system (200) having a movable headrest portion is provided. The padded headrest cover (300, 700) includes a suspended apron portion (320, 720) that is firmly padded and movable along with the headrest of the restraint system, thus providing a proper support for the child's or baby's chest and ensuring an open airway for the child or baby.

## Description

### TECHNICAL FIELD

The present disclosure relates generally to a headrest cover for the child restraint and the child restraint.

### BACKGROUND

Child restraint systems provide a secure supporting for the child in such as a vehicle to prevent the child from being impacted or injured by a sudden change in vehicle speed. For the children who are thinner or younger (e.g. babies or infants), however, it may need to provide an additional cushion attached to the carrier of the child restraint system, so as to support and restrain the child therein stably.

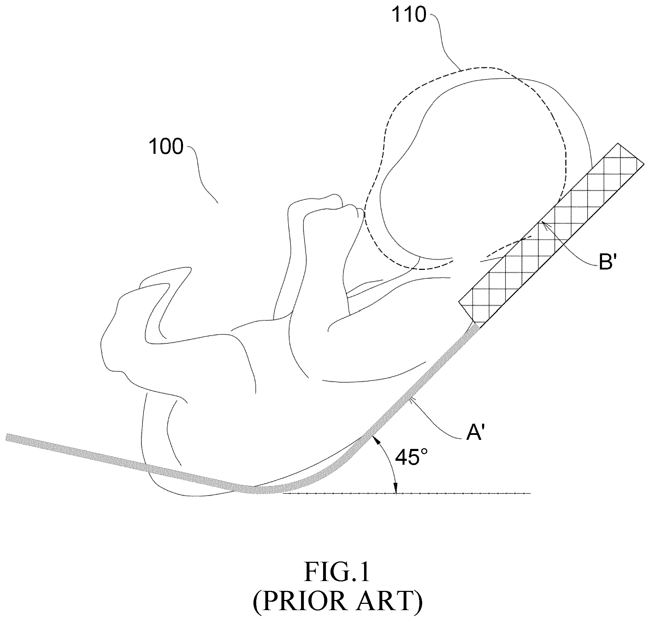

When being restrained in the child restraint system with such cushion, the baby or infant 100, facing rearward of the vehicle, reclines at an angle of approximately 45°, and the torso plane A' where the body of infant is located may be lower than the head plane B' where the head of infant is located. That is, the chest or body of infant may be located at a lower level than the head, resulting in the so-called "chin-to-chest" situation as shown in Fig. 1. In such situation, the infant's head 110 may be pushed toward the chest or body in a downward direction because of locating on the relatively higher head plane B', and his or her airway may be potentially blocked, thus hindering his or her breathing.

### SUMMARY

It is an aspect of the present disclosure to provide a child restraint system. The child restraint system includes a child restraint or carrier providing a space accommodating a child therein and a padded headrest cover. The child restraint includes a movable headrest portion. The padded headrest cover includes a main portion connected to the headrest portion of the child restraint, and an apron portion of a staged or gradually stepped thickness connected to the main portion. The apron portion is suspended and hanging down from the main portion, and is thus movable with the headrest portion.

Preferably, the apron portion has a thickness greater than that of the main portion.

It is another aspect of the present disclosure to provide a headrest cover for a child restraint system having a movable headrest portion. The headrest cover includes a main portion for connecting to the movable headrest portion, and an apron portion connected to the main portion at one side thereof. The apron portion includes a first section connected to the main portion for torso-supporting, a second section connected to the first section for thickness transition, and a third section connected to the second section for bottom-supporting.

Preferably, the first section of the apron portion has a thickness greater than that of the main portion.

### BRIEF DESCRIPTION OF THE DRAWINGS

The following description of the illustrative embodiments may be better understood when read in conjunction with the appended drawings. It is understood that potential embodiments of the disclosed systems are not limited to those depicted.
Fig. 1 schematically shows the "chin-to-chest" situation when a baby or infant is retrained in a child restraint system according to the prior art.
Fig. 2 is a front view schematically showing a child restraint system according to one embodiment of the present disclosure.
Fig. 3 is a front view schematically showing a child restraint system with a padded headrest cover according to one embodiment of the present disclosure.
Fig. 4 is a front view schematically showing a child restraint system with a padded headrest cover according to one embodiment of the present disclosure.
Fig. 5A is a front view schematically showing a padded headrest cover for the child restraint system according to one embodiment of the present disclosure.
Fig. 5B is a side view schematically showing a padded headrest cover for the child restraint system according to one embodiment of the present disclosure.
Fig. 6 schematically shows the child restraint system in use according to one embodiment of the present disclosure.
Fig. 7 is a front view schematically showing a padded headrest cover for the child restraint system according to another embodiment of the present disclosure.
Fig. 8 is a front view schematically showing the child restraint system with a padded headrest cover according to the embodiment of the present disclosure.

### DETAILED DESCRIPTION

The following detailed description is presented to enable a person skilled in the art to make and use the headrest cover for the child restraint system, and such child restraint system of the present disclosure. For purposes of explanation, specific details are set forth to provide an understanding of the present disclosure. However, it will be apparent to one skilled in the art that these specific details are not required to practice the embodiments of the present disclosure. Descriptions of specific applications are provided only as representative examples. Various modifications to the embodiments described herein will be apparent to one skilled in the art, and the general principles defined herein may be applied to other embodiments and applications without departing from the scope of the present disclosure. The present disclosure is not intended to be limited to the embodiments shown but is to be accorded the widest possible scope consistent with the principles and features disclosed herein. Besides, it should be noted that, the serial numbers of the embodiments, e.g. the first, the second, ... and so on, are only used for distinguishing these embodiments, and do not indicate any preference for these embodiments.

In the context of the present disclosure, the child restraint system is taken as an example to illustrate the various aspects of the present disclosure. However, it should be noted that the headrest cover according to the present disclosure may be also used in other applications for supporting and/or restraining the children, babies or infants. Examples of such applications may include dining chairs, strollers, carriers or travel apparatuses.

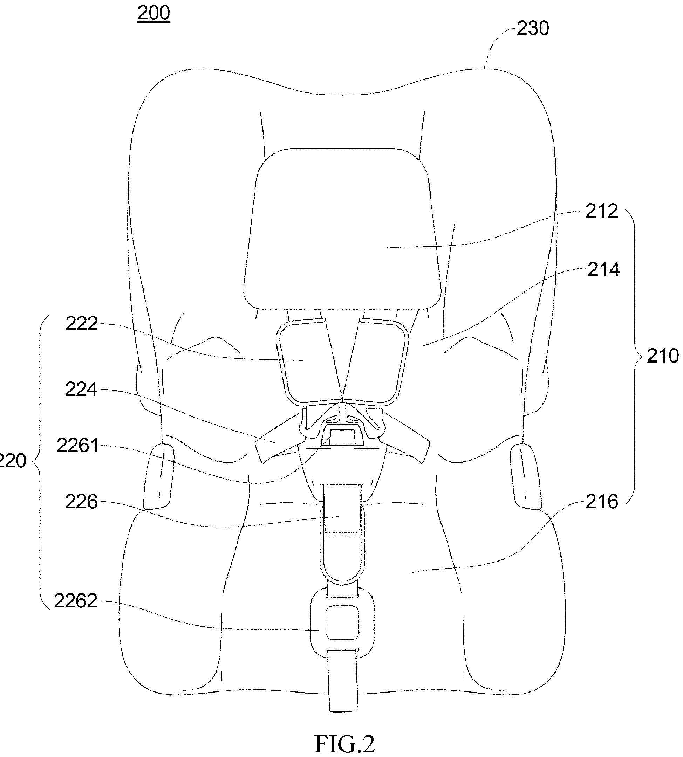

With reference to Fig. 2, which is a front view schematically showing a child restraint system 200 according to one embodiment of the present disclosure, the child restraint system 200 includes the carrier 210 for accommodating a child or baby therein, the safety belt assembly 220 connecting to the carrier 210, and the carrier cover 230 substantially covering the carrier 210. In this embodiment, the child restraint system 200 may be detachably mounted in a vehicle such as a car for carrying and restraining the child or baby therein. In more specific, the child restraint system 200 may be detachably mounted on the car seat, with the child or baby facing rearward of the car. In this embodiment, the child restraint system 200 may be such as an infant car seat or a baby car seat (such as an infant carrier).

The carrier 210 includes the headrest portion 212, and backrest portion 214 and the seat portion 216. In this embodiment, the headrest portion 212, exposing from the carrier cover 230, is connected to the backrest portion 214, and may slide or move relative to the backrest portion 214 in a longitudinal direction of the backrest portion 214. In this manner, the position of the headrest portion 212 relative to the carrier 210 may be adjusted according to the child's or baby's size. The backrest portion 214 is connected to the seat portion 216, thus defining a seating space for accommodating and restraining the child or infant therein.

The safety belt assembly 220 mainly function to restrain the child or baby with the seating space of the carrier 210. The safety belt assembly 220 includes a pair of shoulder belts 222, a pair of lap belts 224 and the crotch strap 226. The crotch strap 226 is connected to the carrier 210 with one end 226A thereof, and the safety belt assembly 220 is further provided with a buckle device 2261 which is connected to the other end 226B of the crotch strap 226. The shoulder belts 222 and the lap belts 224, each being provided with a respective connector such as a locking tongue thereof at one end, may be attached to the crotch strap 226 by inserting the respective connectors to the buckle device 2261, or may be detached therefrom. In this embodiment, the length of crotch strap 226 may be adjusted according to the child's or baby's size. The crotch strap 226 may further include a secure member 2262, such as an adjusting buckle, a ladder lock (8-character buckle) and so on, at a determined position, such that the length of the crotch strap 226 is fixed after adjustment. When being accommodated within the seating space of the carrier 210, the child or baby may be restrained stably in a five-contact-point manner by the safety belt assembly 220 of the child restraint system 200. That is, the pair of shoulder belts 222, the pair of lap belts 224 and the crotch strap 226 of the safety belt assembly 220 provides a stable supporting and restraint for the child or baby in the carrier 210.

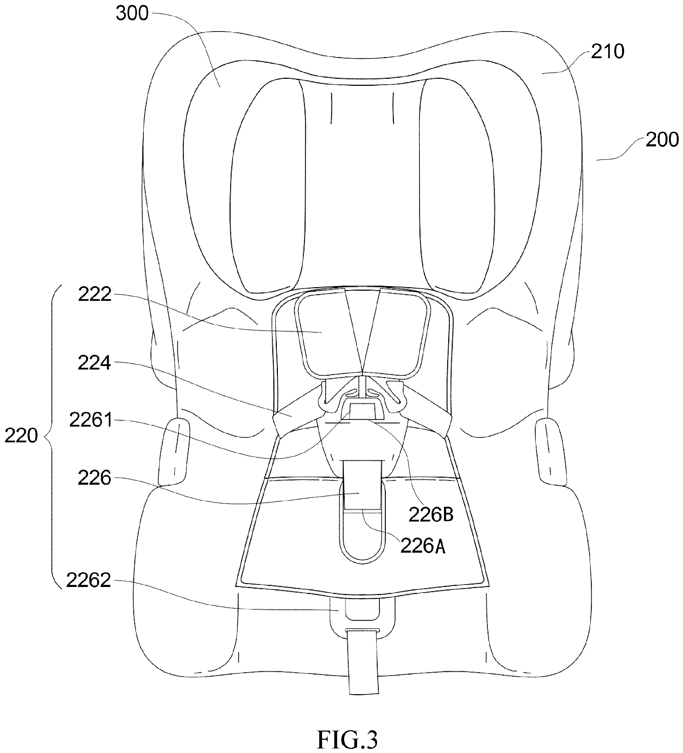

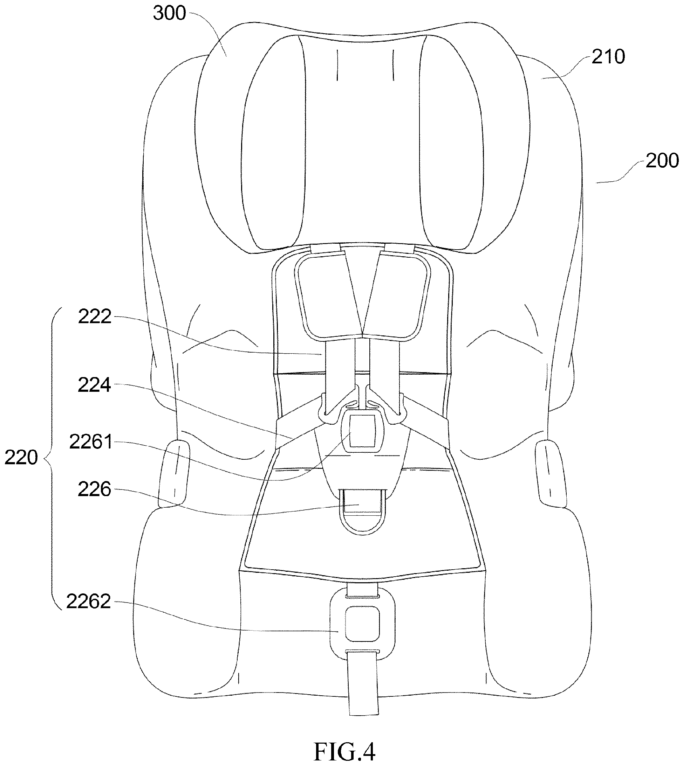

Please refer to Fig. 3 and Fig. 4 schematically showing the child restraint system 200 with the padded headrest cover 300 according to one embodiment of the present disclosure. In this embodiment, the padded headrest cover 300 is attached to the child restraint system 200 by covering or enveloping the headrest portion 212 (shown in Fig. 2) of the carrier 210. As above-mentioned, the position of the headrest portion 212 (shown in Fig. 2) relative to the carrier 210 may be adjusted according to the child's or baby's size by sliding or moving relative to the backrest portion 214 (shown in Fig. 2) in the longitudinal direction of the backrest 214 (shown in Fig. 2), forming a low position as shown in Fig. 3 and a high position as shown in Fig. 4.

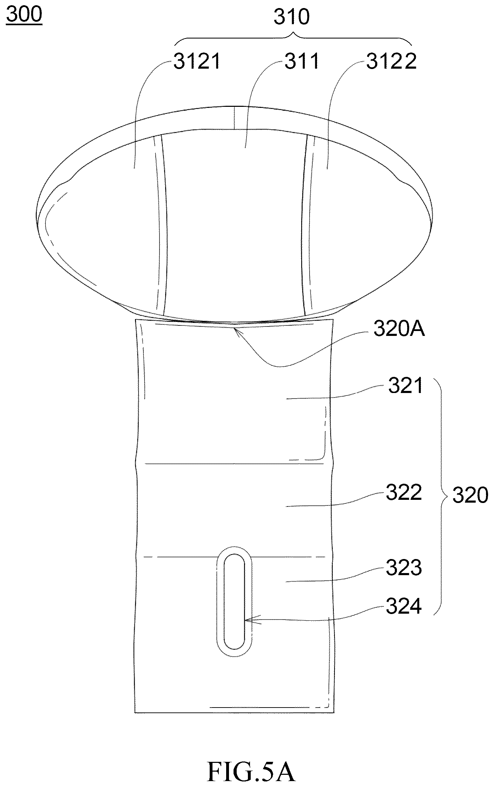

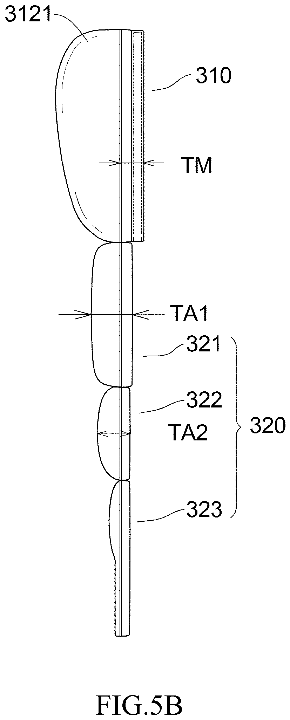

Please refer to Figs. 5A and 5B, which are respective front view and side view schematically showing the padded headrest cover 300 for the child restraint system according to one embodiment of the present disclosure. In this embodiment, the padded headrest cover 300 includes a main portion 310 (having a thickness of TM) for enveloping the headrest portion 212 of the child restraint system 200 (shown in Fig. 3 or Fig. 4), and an apron portion 320 connected to the main portion 310 at one side 320A thereof. The main portion 310 may include a head- receiving portion 311, and a pair of side cheek portions 3121, 3122 connected to the opposite sides of the head-receiving portion 311. In this embodiment, the side cheek portions 3121, 3122 may be padded to provide a more comfortable touch and more stable supporting for the child or baby. In this embodiment, the connection of the side cheek portions 3121, 3122 to the head-receiving portion 311 of the main portion 310, as well as the connection of the apron portion 320 to the main portion 310 may be achieved by means of sewing.

As shown in Figs. 5A and 5B, in this embodiment, the apron portion 320 of the padded headrest cover 300 may include a first section 321 (having a thickness of TA1) for torso- supporting, a second section 322 (having a thickness of TA2) connected to and transiting from the first section 321 to a third portion 323 (having a thickness of TA3), and the third section 323 connected to the second section 322 for seat-supporting. In more specific, the first section 321 of the apron portion 320 is provided as a backrest support for at least supporting the child's or baby's chest and/or torso. The third section 323 of the apron portion 320 is provided as a seat support for at least supporting the child's or baby's pelvic and/or bottom. The second section 322, functioning for transition between the first section 321 and the third section 323, provides a staged or gradual stepped reduction in the thickness for the apron portion 320 according to the present disclosure.

In this embodiment, the padded headrest cover 300 is connected to the carrier 210 of the child restraint system 200 (shown in Fig. 2) with the main portion 310 enveloping the headrest portion 212 and suspending therefrom, while the apron portion 320 is suspending and hanging down from the main portion 310 (and thus the headrest portion 212). In such a manner, the main portion 310, enveloping the headrest portion 212 of the carrier 210, may bring the apron portion 320 to move up and down in conjunction with the headrest portion 212 when the headrest portion 212 is moving or sliding relative to the backrest portion 214 of the carrier 210, so as to ensure that the first section 321 of the apron portion 320 can always be directly behind the baby's shoulder and upper torso to provide a constant torso-support.

In the present disclosure, the apron portion 320 may be designed as having a staged or gradual stepped thickness. In this embodiment, as shown in Fig. 5B, the apron portion 320 of the padded headrest cover 300 may be formed as having different thicknesses for the first section 321, the second section 322 and the third section 323. In this embodiment, the first section 321, i.e. the section for supporting the baby's shoulders and upper torso, is provided with a greatest thickness TA1 among the main portion 310 and the all three sections of the apron portion 320, i.e. TA1>TM, TA1>TA2, and TA1>TA3. In this embodiment, the second section 322, transiting from the first section 321 to the third section 323, enables a gradual reduction in the thickness from the first section 321. According to the present disclosure, the various thicknesses of the first and second sections 321 and 322 of the apron portion 320 may be achieved by corresponding paddings, which will be illustrated in further details below. In this embodiment, the paddings may be selected from, but not limited to, expandable polypropylene (EPP), expandable polyethylene (EPE), soft foams, and the combination thereof. Besides, the first section 321 for supporting the baby's shoulders and upper torso is provided with a greatest thickness in this embodiment; however, one skilled in this art may be appreciated that the first section 321 of the apron portion 320 may be not necessarily the thickest one, as long as it has a thickness greater than that of the main portion 310.

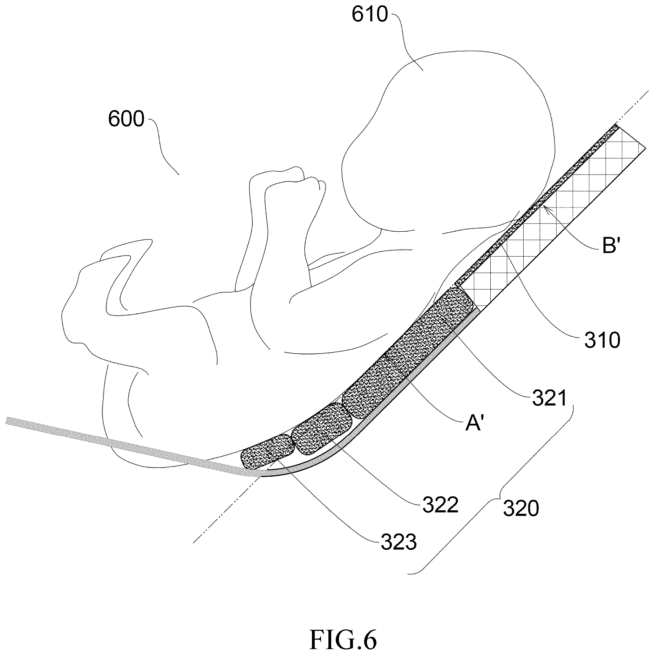

Referring to Fig. 6 as well, because the first section 321 is provided with a greatest thickness, i.e. thicker than each of the main portion 310, the second section 322 and the third section 323, and the location thereof is adjustable to correspond to the baby's upper torso for supporting, the torso plane A' may be raised to be as high as, or even slightly higher than, the head plane B'. The relatively higher torso plane A' enables the baby 600 to throw back his or her head 610, and thus the "chin-to-chest" situation may be avoided, ensuring an open airway for the baby 600 when the baby 600 is restrained in the child restraint system.

Referring back to Fig. 3, Fig. 4 and Fig. 5A, in this embodiment, the third section 323 of the apron portion 320 of the padded headrest cover 300 is provided with a through hole 324 for passing therethrough the crotch strap 226. In more specific, the crotch strap 226 is connected to the carrier 210 with one end thereof, and is passing through the through hole 324 of the padded headrest cover 300 with the other end thereof, then connected to the shoulder belts 222 and the lap belts 224 in a manner as described with regard to Fig. 2. Once the main portion 310 of the padded headrest cover 300 is connected to (e. g. by enveloping) the headrest portion 212 of the carrier 210, and the crotch strap 226 passing through the through hole 324 is connected or attached to the shoulder belts 222 and the lap belts 224, the padded headrest cover 300 may be attached to the child restraint system 200, with the apron portion 320 suspending and hanging down from the main portion 310 but being restrained by the crotch strap 226. This prohibits the padded headrest cover 300 from detaching from the carrier 210, but allows the apron portion 320 of the padded headrest cover 300 to move up and down to adjust the location thereof for torso-supporting when the headrest portion 212 is moved relative to the backrest portion 214 to correspond to the baby's size. The padded headrest cover 300 of the present disclosure ensures that the headrest support and torso support are always in conjunction with each other when the headrest portion 212 is moving up or down (i.e. raised or lowered) in the carrier 210, which may avoid of creating an undesirable gap when the headrest portion 212 is started to be raised.

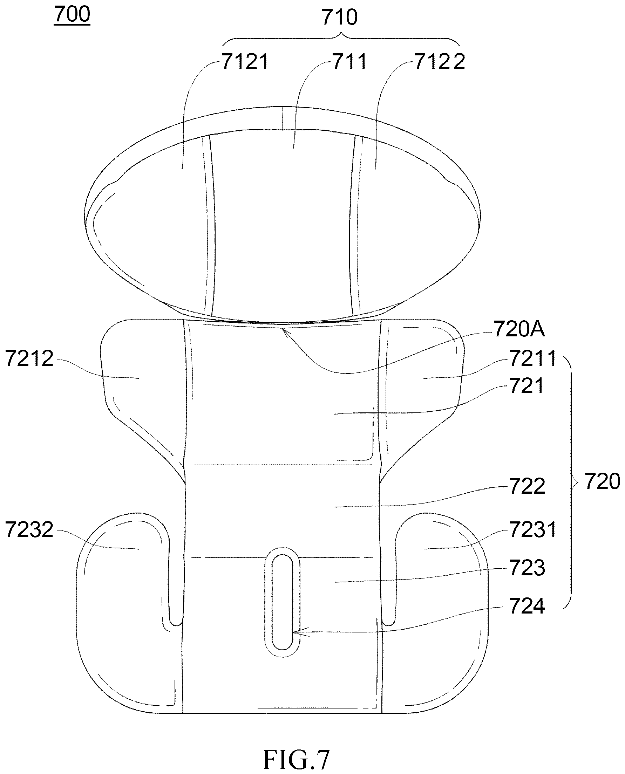

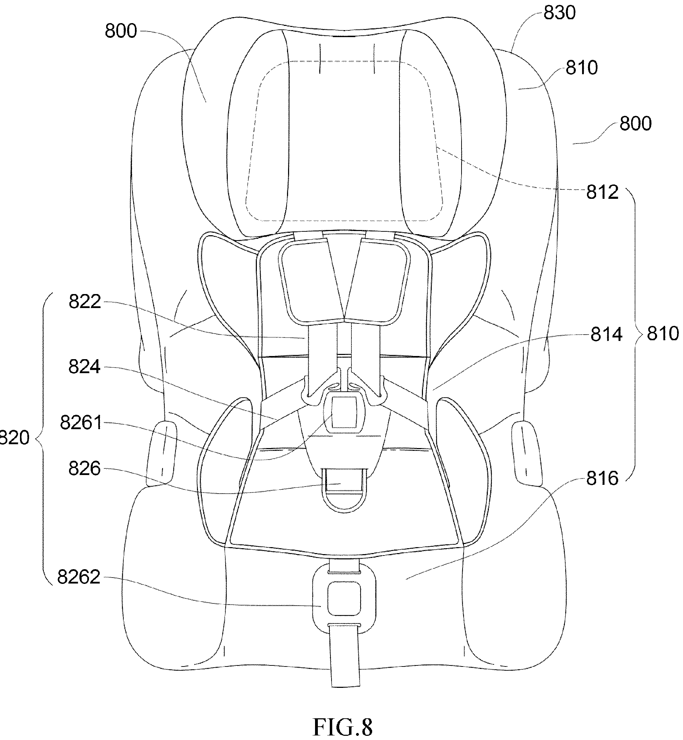

Please refer to Fig. 7 and Fig. 8. Fig. 7 schematically shows a padded headrest cover 700 for the child restraint system according to another embodiment of the present disclosure, and Fig. 8 schematically shows the child restraint system 800 with the padded headrest cover 700 attached thereto according to the embodiment of the present disclosure. The padded headrest cover 700 as shown in Fig. 7 has the structures and configurations similar to the padded headrest cover 300 of Figs. 5A and 5B, including the main portion 710 and the apron portion 720, the main portion 710 may include a head- receiving portion 711, and a pair of side cheek portions 7121, 7122 connected to the opposite sides of the head-receiving portion 711; the apron portion 720 may include the first section 721, the second section 722 and the third section 723 having the through hole 724 formed thereon of the apron portion 720. The child restraint system 800 as shown in Fig. 8 has the structures and configurations similar to the child restraint system 200 of Fig. 2 to Fig. 4, including the carrier 810, the safety belt assembly 820 and the carrier cover 830, and the carrier 810 further inlcudes the headrest portion 812, the backrest portion 814 and the seat portion 816. Similarly, the safety belt assembly 820 includes a pair of shoulder belts 822, a pair of lap belts 824 and the crotch strap 826. The safety belt assembly 820 is further provided with a buckle device 8261 which is connected to the end of the crotch strap 826. The crotch strap 826 may further include a secure member 8262, such as an adjusting buckle, a ladder lock (8-character buckle) and so on, at a determined position, such that the length of the crotch strap 826 is fixed after adjustment. The difference between the two embodiments is that, in this embodiment, the apron portion 720 is provided with side wings. The pair of first side wings 7211 and 7212 are connected to the opposite sides of the first section 721. Optionally, a pair of second side wings 7231 and 7232 are connected to the opposite sides of the third section 723. In this embodiment, the side wings 7211, 7212, 7231, 7232 are connected to the respective sections by means of sewing. However, other manners for firmly connecting the side wings to the respective sections are also possible in other embodiments.

As shown in Fig. 8, in this embodiment, the child restraint system 800 includes the padded headrest cover 700 attached thereto. The pair of first side wings 7211 and 7212, and optionally, the pair of second side wings 7231 and 7232 make the seating space of the carrier 810 relatively smaller and more suitable for the child of small size or for the baby or infant (e.g. the new baby). It allows the child or baby to be restrained in the child restraint system 800 in a more stable way to improve the safety when staying in the vehicle.

As above-mentioned, the apron portion of the padded headrest cover of the present disclosure may be designed as having a staged or gradual stepped thickness, and among the all sections thereof, the first section, i.e. the section for supporting the baby's shoulders and upper torso, should be provided with a greatest thickness. Besides, since the padded headrest cover of the present disclosure may be adopted for supporting a new baby, it is preferred to provide the padded headrest cover with a soft and comfortable surface for the baby without any hard lumps or protrusions thereon. The design of staged or gradual stepped thickness of the apron portion allows the most critical areas, i.e. the areas corresponding to the baby's head and torso, to be provided without a major step from the first section to the region under the infant's bottom, and to avoid the "chin-to-chest" issue. Taking the padded headrest cover 300 as shown in Fig. 5B as an example, below are several illustrative examples of the various variables for the padded headrest cover according to the present disclosure, giving the details of the thickness and padding/materials for the padded headrest cover including the main portion and the apron portion.

### Illustrative Example 1:

The padded headrest cover of illustrative example 1 includes the main portion with both side cheek portions, and the apron portion having the first, second, and third sections. The main portion having the thickness of TM includes no paddings, while the side cheek portions are padded with various thicknesses, depending on the model of child restraint system. The first section of apron portion is padded with two layers of EPP, and the thickness thereof is TA1, where TA1>TM. The second section of apron portion is padded with two layers of soft foam, and the thickness thereof is TA2. The third section of apron portion is formed without paddings. In addition, other and optional variables may include the addition of padded side wings for the first section and the third section, e.g. the material, amount of padding layers, and the thickness thereof.

### Illustrative Example 2:

The padded headrest cover of illustrative example 2 includes the main portion with both side cheek portions, and the apron portion having the first, second, and third sections. The main portion having the thickness of TM includes no paddings, while the side cheek portions are padded with various thicknesses, depending on the model of child restraint system. The first section of apron portion is padded with one layer of EPP/EPE, and the thickness thereof is TA1, where TA1>TM. The second section of apron portion is padded with two layers of soft foam, and the thickness thereof is TA2. The third section of apron portion is formed without paddings. In addition, other and optional variables may include the addition of padded side wings for the first section and the third section, e.g. the material, amount of padding layers, and the thickness thereof.

### Illustrative Example 3:

The padded headrest cover of illustrative example 3 includes the main portion with both side cheek portions, and the apron portion having the first, second, and third sections. The main portion having the thickness of TM includes no paddings, while the side cheek portions are padded with various thicknesses, depending on the model of child restraint system. The first section of apron portion is padded with one layer of EPP/EPE with a thickness of X mm, and two layers of soft foam (each with a thickness of Y mm). The thickness of the first section TA1 thus equals to X+2Y mm, where X=2Y. The second section of apron portion is padded with two layers of soft foam (each with a thickness of Z mm, where Z=Y), and the thickness thereof, TA2, equals to 2Z mm. In this illustrative example, the thickness of the first section TA1 is greater than the thickness of the main portion TM, and the thickness of the second section TA2 is smaller than the thickness of the first section TA1, i.e. TA1>TM and TA2<TA1. The third section of apron portion is formed without paddings. In addition, other and optional variables may include the addition of padded side wings for the first section and the third section, e.g. the material, amount of padding layers, and the thickness thereof.

### Illustrative Example 4:

The padded headrest cover of illustrative example 4 includes the main portion with both side cheek portions, and the apron portion having the first, second, and third sections. The main portion having the thickness of TM includes no paddings, while the side cheek portions are padded with various thicknesses, depending on the model of child restraint system. The first section of apron portion is padded with one layer of EPP/EPE with a thickness of X mm, and thus the thickness of the first section TA1 equals to X mm. The second section of apron portion is padded with two layers of soft foam (each with a thickness of Z mm, where X=2Z), and the thickness thereof, TA2, equals to 2Z mm. In this illustrative example, the thickness of the first section TA1 is greater than the thickness of the main portion TM, and the thickness of the second section TA2 is the same as the thickness of the first section TA1, i.e. TA1>TM and TA2=TA1. The third section of apron portion is formed without paddings. In addition, other and optional variables may include the addition of padded side wings for the first section and the third section, e.g. the material, amount of padding layers, and the thickness thereof.

### Illustrative Example 5:

The padded headrest cover of illustrative example 5 includes the main portion with both side cheek portions, and the apron portion having the first, second, and third sections. The main portion having the thickness of TM includes no paddings, while the side cheek portions are padded with various thicknesses, depending on the model of child restraint system. The first section of apron portion is padded with one layer of EPP/EPE with a thickness of X mm, and thus the thickness of the first section TA1 equals to X mm. The second section of apron portion is padded with two layers of soft foam (each with a thickness of Z mm, where X=Z), and the thickness thereof, TA2, equals to 2Z mm. In this illustrative example, the thickness of the first section TA1 is greater than the thickness of the main portion TM, and the thickness of the second section TA2 is greater than the thickness of the first section TA1, i.e. TA1>TM and TA2>TA1. The third section of apron portion is formed without paddings. In addition, other and optional variables may include the addition of padded side wings for the first section and the third section, e.g. the material, amount of padding layers, and the thickness thereof.

### Illustrative Example 6:

The padded headrest cover of illustrative example 6 includes the main portion with both side cheek portions, and the apron portion having the first, second, and third sections. The main portion having the thickness of TM includes no paddings, while the side cheek portions are padded with various thicknesses, depending on the model of child restraint system. The first section of apron portion is padded with one layer of EPP/EPE with a thickness of X mm, and one layer of soft foam with a thickness of Y mm, where X=Y. The thickness of the first section TA1 thus equals to X+Y mm. The second section of apron portion is padded with two layers of soft foam (each with a thickness of Z mm, where X=Z), and the thickness thereof, TA2, equals to 2Z mm. In this illustrative example, the thickness of the first section TA1 is greater than the thickness of the main portion TM, and the thickness of the second section TA2 equals to the thickness of the first section TA1, i.e. TA1>TM and TA2=TA1. The third section of apron portion is formed without paddings. In addition, other and optional variables may include the addition of padded side wings for the first section and the third section, e.g. the material, amount of padding layers, and the thickness thereof.

### Illustrative Example 7:

The padded headrest cover of illustrative example 7 includes the main portion with both side cheek portions, and the apron portion having the first, second, and third sections. The main portion having the thickness of TM includes no paddings, while the side cheek portions are padded with various thicknesses, depending on the model of child restraint system. The first section of apron portion is padded with one layer of EPP/EPE with a thickness of X mm, and two layers of soft foam with each layer thickness of Y mm, where X=Y. The thickness of the first section TA1 thus equals to X+2Y mm. The second section of apron portion is padded with two layers of soft foam (each with a thickness of Z mm, where Z=Y), and the thickness thereof, TA2, equals to 2Z mm. In this illustrative example, the thickness of the first section TA1 is greater than the thickness of the main portion TM, and the thickness of the second section TA2 is smaller than the thickness of the first section TA1, i.e. TA1>TM and TA2<TA1. The third section of apron portion is formed without paddings. In addition, other and optional variables may include the addition of padded side wings for the first section and the third section, e.g. the material, amount of padding layers, and the thickness thereof.

### Illustrative Example 8:

The padded headrest cover of illustrative example 8 includes the main portion with both side cheek portions, and the apron portion having the first, second, and third sections. The main portion having the thickness of TM includes no paddings, while the side cheek portions are padded with various thicknesses, depending on the model of child restraint system. The first section of apron portion is padded with one layer of EPP/EPE with a thickness of X mm, and one layer of soft foam with a thickness of Y mm, where X=Y. The thickness of the first section TA1 thus equals to X+Y mm. The second section of apron portion is padded with one layer of soft foam with a thickness of Z mm, where Z=Y, and the thickness thereof, TA2, equals to Z mm. In this illustrative example, the thickness of the first section TA1 is greater than the thickness of the main portion TM, and the thickness of the second section TA2 is smaller than the thickness of the first section TA1, i.e. TA1>TM and TA2<TA1. The third section of apron portion is formed without paddings. In addition, other and optional variables may include the addition of padded side wings for the first section and the third section, e.g. the material, amount of padding layers, and the thickness thereof.

### Illustrative Example 9:

The padded headrest cover of illustrative example 9 includes the main portion with both side cheek portions, and the apron portion having the first, second, and third sections. The main portion having the thickness of TM includes no paddings, while the side cheek portions are padded with various thicknesses, depending on the model of child restraint system. The first section of apron portion is padded with one layer of EPP/EPE with a thickness of X mm, and two layers of soft foam with each layer thickness of Y mm, where X=Y. The thickness of the first section TA1 thus equals to X+2Y mm. The second section of apron portion is padded with two layers of soft foam (each with a thickness of Z mm, where Z=Y), and the thickness thereof, TA2, equals to 2Z mm. In this illustrative example, the thickness of the first section TA1 is greater than the thickness of the main portion TM, and the thickness of the second section TA2 is smaller than the thickness of the first section TA1, i.e. TA1>TM and TA2<TA1. The third section of apron portion is formed without paddings. In addition, other and optional variables may include the addition of padded side wings for the first section and the third section, e.g. the material, amount of padding layers, and the thickness thereof.

The variables for the padded headrest cover of illustrative example 9 are similar to those of illustrative example 7. However, the order of layer stacking of the first section of apron portion may be different. In illustrative example 9, the one EPP/EPE layer which is of relatively higher firmness is arranged at the back, while the two layers of soft foam are arranged on front side for contacting the child or baby, so as to provide a more comfortable and softer touch for the baby or child thereon.

In the present disclosure, the padded headrest cover having a padded apron portion of staged or gradual stepped reduction in thickness helps the child or baby, when restrained in the child restraint system, to raise his or her upper torso including the shoulders and the chest, making the head plane is at the same plane with the torso plane, or even lower than the torso plane. This avoids the potential "chin-to-chest" issue, and ensures an open airway for the child or baby restrained in the child restraint system. Since the apron portion is not attached to the carrier of the child restraint system, but only suspending and hanging down from the main portion (i.e. the portion connected to the headrest portion of the carrier) of padded headrest cover, the apron portion may move up and down properly when the headrest portion is moved relative to the backrest portion to correspond to the child's or baby's size. This ensures that the chest/torso support may be always provided at a proper location for infants of different sizes.

Besides, the staged padding of the padded headrest cover provides a more comfortable and stable environment for the child or baby restrained in the child restraint system.

It should be noted that the illustrations and descriptions of the examples and embodiments shown in the figures are for exemplary purposes only, and should not be construed limiting the disclosure. One skilled in the art will appreciate that the present disclosure contemplates various embodiments. Additionally, it should be understood that the concepts described above with the above-described examples and embodiments may be employed alone or in combination with any of the other examples and embodiments described above. It should further be appreciated that the various alternative examples and embodiments described above with respect to one illustrated embodiment can apply to all examples and embodiments as described herein, unless otherwise indicated.

Unless explicitly stated otherwise, each numerical value and range should be interpreted as being approximate as if the word "about," "approximately," or "substantially" preceded the value or range. The terms "about," "approximately," and "substantially" can be understood as describing a range that is within a certain range of a specified value unless otherwise stated.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without author input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

While certain examples have been described, these examples are not intended to limit the scope of the inventions disclosed herein. Thus, nothing in the foregoing description is intended to imply that any particular feature, characteristic, step, module, or block is necessary or indispensable. Indeed, the novel methods and systems described herein may be embodied in a variety of other forms; furthermore, various omissions, substitutions, and changes in the form of the methods and systems described herein may be made without departing from the spirit of the inventions disclosed herein. The accompanying claims and their equivalents are intended to cover such forms or modifications as would fall within the scope and spirit of certain of the inventions disclosed herein.

It should be understood that the steps of the exemplary methods set forth herein are not necessarily required to be performed in the order described, and the order of the steps of such methods should be understood to be merely exemplary. Likewise, additional steps may be included in such methods, and certain steps may be omitted or combined, in methods consistent with various embodiments of the present invention.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

The words "inward," "outward," "upper," and "lower" refer to directions toward or away from, respectively, the geometric center of the component.

It will be understood that reference herein to "a" or "one" to describe a feature such as a component or step does not foreclose additional features or multiples of the feature. For instance, reference to a device having, comprising, including, or defining "one" of a feature does not preclude the device from having, comprising, including, or defining more than one of the feature, as long as the device has, comprises, includes, or defines at least one of the feature. Similarly, reference herein to "one of" a plurality of features does not foreclose the invention from including two or more of the features. For instance, reference to a device having, comprising, including, or defining "one of a protrusion and a recess" does not foreclose the device from having both the protrusion and the recess.

## Claims

1. A headrest cover (300, 700) for a child restraint system (200) having a movable headrest portion (212), wherein the headrest cover (300, 700) comprises:
a main portion (310, 710) for connecting to the movable headrest portion (212); and
an apron portion (320, 720) connected to the main portion (310, 710) at one side thereof, the apron portion (320, 720) including:
a first section (321, 721) connected to the main portion (310, 710) for torso-supporting;
wherein the first section (321, 721) has a thickness greater than that of the main portion (310, 710).

2. The headrest cover (300, 700) according to claim 1, wherein, the apron portion (320, 720) comprises:
a second section (322, 722) connected to the first section (321, 721) for thickness transition; and/or
a third section (323, 723) connected to the second section (322, 722) for bottom-supporting.

3. The headrest cover (300, 700) according to claim 1 or 2, wherein, the main portion (310, 710) comprises:
a head- receiving portion (311, 711); and in particular
a pair of side cheek portions (3121, 3122; 7121, 7122) connected to the opposite sides of the head-receiving portion (311, 711).

4. The headrest cover (300, 700) according to claim 3, wherein, the connection of the side cheek portions to the head-receiving portion (311, 711) of the main portion (310, 710), and/or the connection of the apron portion (320, 720) to the main portion (310, 710) are achieved by means of sewing.

5. The headrest cover (300, 700) according to any of the preceding claims, wherein, the third section (323, 723) of the apron portion (320, 720) is provided with a through hole (324, 724) for passing therethrough a crotch strap (226) of the child restraint system (200).

6. The headrest cover (300, 700) according to any of the preceding claims, wherein, the apron portion (320, 720) suspends and hangs from the main portion (310, 710), for allowing the apron portion (320, 720) to move up and down.

7. The headrest cover (300, 700) according to any of the preceding claims, wherein
- the apron portion (320, 720) suspends and hangs from the main portion (310, 710) and is restrained by a crotch strap (226) of the child restraint system (200) but allows the apron portion (320, 720) to move up and down; and/or
- the apron portion (720) is provided with a pair of first side wings (7211, 7212), and the pair of first side wings (7211, 7212) are connected to the opposite sides of the first section (321, 721).

8. The headrest cover (300, 700) according to any of the preceding claims, wherein, the apron portion (720) is provided with a pair of second side wings (7231, 7232), and the pair of second side wings (7231, 7232) are connected to the opposite sides of the third section (723).

9. The headrest cover (300, 700) according to any of the preceding claims, wherein, the main portion (310, 710) has a thickness of TM and includes no paddings, the first section (321, 721) of apron portion (320, 720) is padded with one layer or two layers of EPP/EPE, and a thickness thereof is TA1, where TA1>TM, the second section (322, 722) of apron portion (320, 720) is padded with two layers of soft foam, the third section (323, 723) of apron portion (320, 720) is formed without paddings.

10. The headrest cover (300, 700) according to any of the preceding claims, wherein, the main portion (310, 710) has a thickness of TM and includes no paddings, the first section (321, 721) of apron portion (320, 720) is padded with one layer of EPP/EPE with a thickness of X mm, and two layers of soft foam, and each with a thickness of Y mm, the thickness TA1 of the first section (321, 721) thus equals to X+2Y mm, the second section (322, 722) of apron portion (320, 720) is padded with two layers of soft foam, and each with a thickness of Z mm, where Z=Y, and the thickness thereof, TA2, equals to 2Z mm, the thickness TA1 of the first section (321, 721) is greater than the thickness TM of the main portion (310, 710), and the thickness TA2 of the second section (322, 722) is smaller than the thickness TA1 of the first section (321, 721), the third section (323, 723) of apron portion (320, 720) is formed without paddings.

11. The headrest cover (300, 700) according to claim 10, wherein, the one EPP/EPS layer is arranged at a back away from the child or baby, while the two layers of soft foam are arranged on a front side for contacting the child or baby.

12. The headrest cover (300, 700) according to any of the preceding claims, wherein, the main portion (310, 710) having the thickness of TM includes no paddings, the first section (321, 721) of apron portion (320, 720) is padded with one layer of EPP/EPE with a thickness of X mm, and thus the thickness TA1 of the first section (321, 721) equals to X mm, the second section (322, 722) of apron portion (320, 720) is padded with two layers of soft foam, and each with a thickness of Z mm, where X=2Z, and the thickness thereof, TA2, equals to 2Z mm, the thickness TA1 of the first section (321, 721) is greater than the thickness TM of the main portion (310, 710), and the thickness TA2 of the second section (322, 722) is greater than or the same as the thickness TA1 of the first section (321, 721), the third section (323, 723) of apron portion (320, 720) is formed without paddings.

13. The headrest cover (300, 700) according to any of the preceding claims, wherein, the main portion (310, 710) having the thickness of TM includes no paddings, the first section (321, 721) of apron portion (320, 720) is padded with one layer of EPP/EPE with a thickness of X mm, and one layer of soft foam with a thickness of Y mm, where X=Y, the thickness TA1 of the first section (321, 721) thus equals to X+Y mm, the second section (322, 722) of apron portion (320, 720) is padded with two layers of soft foam, and each with a thickness of Z mm, where X=Z, and the thickness thereof, TA2, equals to 2Z mm, the thickness TA1 of the first section (321, 721) is greater than the thickness TM of the main portion (310, 710), and the thickness TA2 of the second section (322, 722) equals to the thickness TA1 of the first section (321, 721), the third section (323, 723) of apron portion (320, 720) is formed without paddings.

14. The headrest cover (300, 700) according to any of the preceding claims, wherein, the main portion (310, 710) having the thickness of TM includes no paddings, the first section (321, 721) of apron portion (320, 720) is padded with one layer of EPP/EPE with a thickness of X mm, and one layer of soft foam with a thickness of Y mm, where X=Y, the thickness of the first section (321, 721) TA1 thus equals to X+Y mm, the second section (322, 722) of apron portion (320, 720) is padded with one layer of soft foam with a thickness of Z mm, where Z=Y, and the thickness thereof, TA2, equals to Z mm, the thickness TA1 of the first section (321, 721) is greater than the thickness TM of the main portion (310, 710), and the thickness TA2 of the second section (322, 722) is smaller than the thickness TA1 of the first section (321, 721), the third section (323, 723) of apron portion (320, 720) is formed without paddings.

15. A child restraint system (200), comprising:
a child restraint, the child restraint including a movable headrest portion (212); and
a padded headrest cover (300, 700) as claimed in one of claims 1-14,
in particular wherein the main portion (310, 710) of the headrest cover (300, 700) is connected to the headrest portion (212), and an apron portion (320, 720) of the headrest cover (300, 700) having a staged thickness connected to the main portion (310, 710), the apron portion (320, 720) being movable with the headrest portion (212).
